# EUROPÄISCHE PATENTSCHRIFT

(11) **EP 3 487 645 B1**
(45) Veröffentlichungstag und Bekanntmachung des Hinweises auf die Patenterteilung: **18.08.2021**
(21) Anmeldenummer: 17735391.9
(22) Anmeldetag: 27.06.2017
(51) Int. Cl.: B21D 37/20, B23P 15/24

(54) **VERFAHREN ZUM HERSTELLEN EINES METALLBEARBEITUNGSWERKZEUGS**
METHOD FOR PRODUCING A METAL MACHINING TOOL
PROCÉDÉ DE FABRICATION D'UN OUTIL D'USINAGE DE MÉTAUX

(30) Priorität: 21.07.2016 DE 102016213375
(43) Veröffentlichungstag der Anmeldung: 29.05.2019
(73) Patentinhaber: AUDI AG, 85045 Ingolstadt (DE)
(72) Erfinder: CANTI, Robert, 80939 München (DE); SANHIETER, Stefan, 86571 Langenmosen (DE); DISCH, Christian, 85053 Ingolstadt (DE); NONEDER, Johannes, 85049 Ingolstadt (DE)
(86) Internationale Anmeldenummer: PCT/EP2017/000754
(87) Internationale Veröffentlichungsnummer: WO 2018/014989

(56) Entgegenhaltungen:
- EP-A1- 1 448 325
- DE-A1- 10 155 234
- DE-A1- 10 231 001

## Beschreibung

Die Erfindung betrifft ein Verfahren zum Herstellen eines Metallbearbeitungswerkzeugs.

Zum Umformen eines Bauteils aus Blech wird ein Umformwerkzeug verwendet, das zwei zueinander komplementär ausgebildete Teilformen aufweist. Hierzu wird das Bauteil aus Blech zwischen den beiden Teilformen angeordnet. Danach werden die beiden Teilformen gegeneinander gedrückt, wobei das Bauteil zwischen den beiden Teilformen gepresst und umgeformt wird.

Die Druckschrift DE 101 55 234 A1 beschreibt ein Umformwerkzeug, das beispielsweise für das Tiefziehen von Metallteilen eingesetzt wird. Dabei umfasst das Umformwerkzeug einen Teilbereich, der aus einem Kunststoff besteht, in den ein Material mit Gleiteigenschaften eingelagert ist.

Die Druckschrift DE 102 31 001 A1 beschreibt ein mindestens teilweise aus Kunststoff bestehendes Werkzeug, das einen in den Kunststoff eingelagerten Anteil an nanoskaligen Partikeln enthält. Dieses Werkzeug ist für das Tiefziehen von Metallblech als Karosseriebauteil eines Automobils vorgesehen.

Weiterhin ist aus der Druckschrift DE 69 001 890 T2 ein Verfahren zum Formen eines Blechzuschnitts zur Herstellung einer Maske für eine Kathodenstrahlröhre bekannt.

Weiterhin wird auf die Veröffentlichungen von Frank, C.: Kunststoff als Werkzeugwerkstoff für das Tiefziehen von Feinblechen, 1999, von Deiler, G. und Lobemeier, J.: Tiefziehwerkzeuge aus Kunststoff - ideal für mittlere Serien. (Blech InForm 1/2003, S. 42 -44), von Deiler, G. und Schweiker, T.: Kunststoff senkt die Kosten im Kleinserien-Karosseriebau. (Blech InForm 4/2005, S. 36 -40) und von Deiler, G.: Untersuchungen zum Eignungsprofil polymerer Werkzeugwerkstoffe für das Tiefziehen von Feinblechen (Berichte aus dem IFUM, Band: 05/2005) verwiesen.

Vor diesem Hintergrund wird ein Verfahren mit den Merkmalen des unabhängigen Patentanspruchs 1 vorgestellt. Ausgestaltungen des Verfahrens gehen aus den abhängigen Patentansprüchen und der Beschreibung hervor.

Das erfindungsgemäße Verfahren ist zum Herstellen eines Metallbearbeitungswerkzeugs, üblicherweise zum Herstellen mindestens einer ersten Teilform des Metallbearbeitungswerkzeugs vorgesehen. Zum Herstellen der ersten Teilform wird ein ursprünglicher Grundkörper aus Kunststoff bereitgestellt, wobei eine Oberfläche des Grundkörpers zumindest abschnittsweise glatt bzw. eben ist und in mehrere Bereiche aufgeteilt wird. An und/oder auf mindestens einem Bereich der mehreren Bereichen der Oberfläche des Grundkörpers wird mindestens eine Gussform angeordnet, wobei die mindestens eine Gussform und der mindestens eine Bereich der Oberfläche mindestens einen Hohlraum umschließen, der eine Negativform für eine auf dem mindestens einen Bereich aufzutragende Schicht Kunststoff bildet. In den mindestens einen Hohlraum wird Kunststoff gefüllt und ausgehärtet, wobei der Kunststoff an dem mindestens einen Bereich mit der Oberfläche des Grundkörpers verbunden und unter Bereitstellung der Schicht darauf aufgebracht wird. Die hergestellte erste Teilform ist als Niederhalter für das Metallbearbeitungswerkzeug ausgebildet und/oder zu bezeichnen.

An und/oder auf dem mindestens einen Bereich der ursprünglichen Oberfläche des Grundkörpers wird mindestens eine weitere Sorte Kunststoff, die mindestens eine Materialeigenschaft aufweist, aufgebracht. Der Grundkörper besteht aus mindestens einer Sorte Kunststoff mit mindestens einer Materialeigenschaft. Dabei ist es möglich, für den Grundkörper und die mindestens eine Schicht unterschiedliche Sorten Kunststoff mit unterschieden Materialeigenschaften zu verwenden.

In Ausgestaltung werden auf mindestens zwei unterschiedlichen Bereichen bzw. Abschnitten der Oberfläche des Grundkörpers Kunststoffe, üblicherweise zwei Arten bzw. Sorten Kunststoff, aufgebracht, die sich durch mindestens eine Materialeigenschaft voneinander unterscheiden. Demnach ist es denkbar, dass auf einem ersten Bereich der Oberfläche eine erste Sorte Kunststoff, auf einem zweiten Bereich der Oberfläche eine zweite Sorte Kunststoff und auf mindestens einem weiteren dritten Bereich der Oberfläche mindestens eine dritte Sorte Kunststoff aufgebracht wird. Dabei unterscheiden sich mindestens zwei derartige Sorten bzw. Arten Kunststoff durch die mindestens eine Materialeigenschaft voneinander. Falls mindestens einer der genannten Bereiche eine Ausnehmung aufweist, kann der Kunststoff darin und somit ebenfalls an dem Bereich angeordnet werden.

Als die mindestens eine Materialeigenschaft des zu verwendenden Kunststoffs für die mindestens eine Schicht aus Kunststoff wird bzw. werden eine Art und somit eine chemische Zusammensetzung des Kunststoffs, eine Federhärte und/oder eine Elastizität bzw. ein E-Modul des Kunststoffs, ein Reibwert des Kunststoffs sowie eine Dicke der Schicht berücksichtigt und somit gewählt und/oder eingestellt. Die auf unterschiedlichen Bereichen der Oberfläche des Grundkörpers aus Kunststoff befestigten Schichten aus Kunststoff unterscheiden sich mindestens durch die Art bzw. Zusammensetzung des Kunststoffs und somit in der Regel durch dessen Reibwert und/oder dessen Federhärte sowie in Ausgestaltung durch die Dicke der jeweiligen Schicht.

In Ausgestaltung wird der mindestens eine Bereich, bevor die Gussform daran und/oder darauf angeordnet wird, bearbeitet. Dies ist bspw. dann vorgesehen, wenn sich der Kunststoff des Grundkörpers, bspw. durch mindestens eine Materialeigenschaft, von dem darauf aufzubringenden Kunststoff unterscheidet. Dabei ist vorgesehen, dass der mindestens eine Bereich bspw. aufgeraut wird. Alternativ oder ergänzend wird auf dem mindestens einen, ggf. zuvor aufgerauten Bereich zunächst ein Haftmittel aufgetragen, bevor die Schicht aus Kunststoff aufgebracht wird. Dabei ist es möglich, dass der mindestens eine Bereich zunächst spanend bearbeitet und somit aufgeraut wird.

Unabhängig davon, ob der mindestens eine Bereich aufgeraut wird, kann auf diesen ein bspw. als Klebstoff oder Lösungsmittel ausgebildetes Haftmittel aufgebracht werden, wodurch unterschiedliche Sorten Kunststoff untereinander zu verbinden sind.

Weiterhin wird der Grundkörper für die erste Teilform ebenfalls mit einer bspw. endkonturnahen Gussform gegossen.

Außerdem wird eine zweite Teilform als Gegenform bzw. -stück zu der ersten Teilform bereitgestellt, die in der Regel aus Metall, insbesondere aus Stahl gebildet ist und eine Nullgeometrie besitzt, um eine hohe Maßhaltigkeit zu gewährleisten. Diese zweite Teilform kann in Ausgestaltung ebenfalls mit einer Gussform gegossen werden. Alternativ ist es auch denkbar, dass die zweite Teilform ebenfalls aus Kunststoff oder Metall und Kunststoff gebildet ist. Dabei kann zumindest der Grundkörper der zweiten Teilform wie im Fall der ersten Teilform aus Kunststoff gegossen sein. Auf der Oberfläche des Grundkörpers der zweiten Teilform kann dann, wie im Fall der ersten Teilform, ebenfalls mindestens eine Schicht aus Kunststoff mit mindestens einer Materialeigenschaft durch ein Gießverfahren mit einer Gussform aufgebracht sein. Es ist jedoch auch möglich, zum Herstellen der zweiten Teilform auf einen Grundkörper aus Metall mindestens eine Schicht Kunststoff aufzubringen.

Bei dem Verfahren ist in einer möglichen Ausgestaltung vorgesehen, dass der Kunststoff auf dem mindestens einen ebenen Bereich der Oberfläche des Grundkörpers aufgebracht wird.

In einer weiteren alternativen oder ergänzenden Ausgestaltung des Verfahrens wird an dem mindestens einem Bereich der Oberfläche des Grundkörpers zunächst Kunststoff des Grundkörpers abgetragen und eine Ausnehmung bzw. Tasche gebildet wird, wobei an dem mindestens einem Bereich der Oberfläche des Grundkörpers die mindestens eine Gussform angeordnet wird, wobei die mindestens eine Gussform und die Ausnehmung an dem mindestens einen Bereich der Oberfläche den mindestens einen Hohlraum umschließen, wobei in den mindestens einen Hohlraum Kunststoff gefüllt und ausgehärtet wird, wobei der Kunststoff an dem mindestens einen Bereich mit der Oberfläche des Grundkörpers verbunden und unter Bereitstellung der Schicht in die Ausnehmung eingebracht wird.

Somit ist es möglich, den Kunststoff auf einem bspw. glatten, ebenen und/oder flachen Bereich der ursprünglichen Oberfläche anzuordnen, wobei die darauf aufgebrachte Schicht Kunststoff eine Erhebung auf der ursprünglichen Oberfläche bildet. Falls der Kunststoff in der Ausnehmung der Oberfläche angeordnet ist, wird die Schicht aus Kunststoff in die Ausnehmung eingebracht, wobei eine glatte Oberfläche gebildet wird, die bereichsweise aus unterschiedlichen Kunststoffen besteht.

Das Metallbearbeitungswerkzeug umfasst eine erste und eine zweite Teilform, wobei zumindest die erste Teilform durch eine Ausführungsform des erfindungsgemäßen Verfahrens hergestellt ist bzw. wird.

Dieses Metallbearbeitungswerkzeug ist in der Regel zum Bearbeiten eines Werkstücks aus Metall ausgebildet.

Hierzu ist das zu bearbeitende Werkstück zwischen der ersten Teilform aus Kunststoff, auf der mindestens eine Schicht Kunststoff mit mindestens einer Materialeigenschaft aufgetragen ist, und der zweiten Teilform anzuordnen, wobei die beiden Teilformen gegeneinander zu drücken sind, wodurch das Werkstück durch die beiden Teilformen zu bearbeiten und/oder fixieren ist. In Ausgestaltung wird eine Form des zu bearbeitenden Werkstücks durch die zweite Teilform beeinflusst und/oder bestimmt.

Die erste Teilform des Metallbearbeitungswerkzeugs ist, wie bereits voranstehend erwähnt, als Niederhalter ausgebildet.

Zum Herstellen der ersten Teilform und somit des Niederhalters für das Metallbearbeitungswerkzeug wird der Grundkörper aus Kunststoff bereitgestellt, wobei der mindestens eine Bereich auf der einen Oberfläche des Grundkörpers durch eine Oberflächenbearbeitungsmaßnahme behandelt wird, wobei auf dem mindestens einen bearbeiteten und/oder behandelten Bereich die Schicht aus Kunststoff, die die mindestens eine Materialeigenschaft aufweist, aufgebracht wird.

Das Metallbearbeitungswerkzeug ist zum Bearbeiten von Bauteilen oder Werkstücken ausgebildet, die bspw. aus Blech bestehen, weshalb das Metallbearbeitungswerkzeug auch als Blechbearbeitungswerkzeug zu bezeichnen und/oder ausgebildet ist. In Ausgestaltung ist das Metallbearbeitungswerkzeug als Umformwerkzeug und/oder Trennwerkzeug ausgebildet.

Üblicherweise wird der Kunststoff über das Haftmittel auf den mindestens einen Bereich bzw. Abschnitt des Grundkörpers geklebt.

An und/oder auf dem Bereich der Oberfläche des Grundkörpers wird die mindestens eine Gussform angeordnet, wobei die mindestens eine Gussform und der mindestens eine bearbeitete Bereich der Oberfläche mindestens einen Hohlraum umschließen, der eine Negativform für den auf dem bearbeiteten Abschnitt aufzutragenden Kunststoff und somit die hierbei bereitzustellende Schicht bildet. In den mindestens einen Hohlraum wird flüssiger Kunststoff gefüllt und ausgehärtet, wobei der Kunststoff an/auf dem mindestens einen bearbeiteten Bereich mit der Oberfläche des Grundkörpers verbunden und unter Bereitstellung der Schicht darauf angeordnet und/oder damit bzw. daran befestigt wird.

In der Regel wird der mindestens eine Bereich beim Bearbeiten zunächst spanend bearbeitet und somit aufgeraut. In Ausgestaltung wird der mindestens eine Bereich gefräst und somit spanend bearbeitet.

Als weitere Komponente des Metallbearbeitungswerkzeugs wird neben der ersten Teilform bzw. dem Niederhalter eine zweite Teilform bereitgestellt, die als Gegenstück zu der ersten Teilform ausgebildet ist. So weist diese zweite Teilform an einer Oberfläche mindestens eine Ausnehmung auf, die zu der mindestens einen Schicht auf der Oberfläche der ersten Teilform korrespondiert. In der Regel sind die Oberflächen der beiden Teilformen zueinander komplementär ausgebildet.

Somit ist es möglich, mindestens die erste Teilform, ggf. beide Teilformen, aus Kunststoff statt aus einem metallischem Werkstoff, bspw. Gusswerkstoff, herzustellen. Das Metallbearbeitungswerkzeug weist somit im Vergleich zu einem Werkzeug aus Metall eine geringere Masse auf und kann somit auch unter höheren Hubzahlen betrieben werden, wodurch negative Auswirkungen massebedingter dynamischer Effekte in dem Metallbearbeitungswerkzeug während einer Bearbeitung des Werkstücks reduziert oder eliminiert werden.

Der Grundkörper für die erste Teilform ist in der Regel aus einem homogenen Kunststoff herzustellen. Der Grundkörper für die zweite Teilform ist vorzugsweise aus einem homogenen Metall, insbesondere aus Stahl, oder alternativ aus einem homogenen Kunststoff herstellbar. Durch Verwendung eines Kunststoffs zumindest für die erste Teilform ergibt sich aufgrund höherer Bearbeitungsgeschwindigkeiten eine reduzierte Zerspanungszeit. Außerdem sind zum Herstellen des Metallbearbeitungswerkzeugs geringe manuelle Tätigkeiten, bspw. eine zusätzliche Verarbeitung und/oder Einarbeitung, erforderlich. Das Metallbearbeitungswerkzeug ist einfach nachzubearbeiten und bei Bedarf spanend zu überarbeiten. Auf der Oberfläche der ersten Teilform werden durch unterschiedliche Kunststoffe Unterschiede einer wirksamen Fläche gezielt lokal erzeugt. Weiterhin ist das Metallbearbeitungswerkzeug einfach zu verändern. Außerdem können daran weitere bspw. als Normteile ausgebildete Komponenten für das Metallbearbeitungswerkzeug befestigt werden. Außerdem weisen Teilformen aus Kunststoff gute Dämpfungseigenschaften auf. Die zweite Teilform ist in Ausgestaltung zumindest teilweise, bspw. aus Metall und Kunststoff oder vollständig aus Metall gebildet. Falls die zweite Teilform aus Metall gebildet ist, kann diese eine Nullgeometrie aufweisen, wodurch eine Maßhaltigkeit eines bspw. aus Blech gebildeten Werkstücks zu gewährleisten ist.

Das Metallbearbeitungswerkzeug, bspw. ein Umformwerkzeug und/oder ein Trennwerkzeug, ist durch eine Ausführungsform des vorgestellten Verfahrens herzustellen und zum Bearbeiten, bspw. Umformen, eines Werkstücks bzw. Bauteils ausgebildet.

Das Metallbearbeitungswerkzeug umfasst als Niederhalter die erste Teilform mit dem Grundkörper aus Kunststoff, dessen Oberfläche in mehrere Bereiche aufgeteilt ist, wobei auf mindestens einem Bereich eine Schicht aus Kunststoff, die mindestens eine Materialeigenschaft aufweist, aufgebracht und somit befestigt ist. Die zweite Teilform des Metallbearbeitungswerkzeugs ist als Gegenstück zu der ersten Teilform ausgebildet.

Das Metallbearbeitungswerkzeug ist in Ausgestaltung zum Umformen eines Werkstücks bzw. Bauteils aus Metall ausgebildet, wobei das umzuformende Werkstück bzw. Bauteil in der Regel als Blech ausgebildet wird oder zu bezeichnen ist.

Bei einem Betrieb des Metallbearbeitungswerkzeugs ist das umzuformende Werkstück zwischen der ersten Teilform bzw. dem Niederhalter aus Kunststoff, auf der mindestens eine Schicht Kunststoff mit mindestens einer Materialeigenschaft aufgetragen ist, und der zweiten Teilform anzuordnen. Die beiden Teilformen sind gegeneinander zu drücken und/oder zu pressen, wodurch das Werkstück, d. h. durch die beiden bzw. zwischen den beiden Teilformen, umzuformen und/oder zu fixieren ist.

Im Vergleich zu einem üblichem Metallbearbeitungswerkzeug, dessen beide Teilformen in der Regel komplett aus Metall gebildet sind, wird durch Vorsehen mindestens einer Schicht aus Kunststoff mit mindestens einer Materialeigenschaft der Reibwert bzw. Reibkoeffizient in jenem Bereich der Oberfläche der ersten Teilform, auf der die mindestens eine Schicht aus Kunststoff aufgebracht ist, und dem Bauteil aus Metall erhöht, wohingegen ein Reibwert zwischen zwei Teilen aus Metall in der Regel geringer ist. Somit kann bei Einsatz des Metallbearbeitungswerkzeugs eine Normalkraft bzw. Niederhaltekraft, die zwischen den beiden Teilformen bei einem Umformen des Bauteils aufzubringen ist, bei gleichbleibender Haltekraft bzw. Rückhaltekraft reduziert werden. Durch Reduktion der Niederhaltekraft wird das Bauteil durch die mindestens eine Schicht aus Kunststoff nicht verformt bzw. plastifiziert. Ferner werden mit dem Metallbearbeitungswerkzeug ansonsten auftretende Zugkräfte, die bei einem Metallbearbeitungsverfahren wie Schneiden, Verformen und/oder Prägen auftreten, vermindert, wodurch auch ein Verzug des Bauteils oder Oberflächenfehler des umgeformten Bauteils vermieden werden. Außerdem kann für die Bearbeitung ein Prozessfenster vergrößert werden, da eine zum Niederhalten benötigte Kraft geringer ist und somit für die Bearbeitung auch eine Presse mit einer geringen Kraft eingesetzt werden kann.

Durch gezieltes Festlegen des mindestens einen Bereichs auf der Oberfläche der ersten Teilform bzw. des Niederhalters sind durch Auswahl der mindestens einen Materialeigenschaft des Kunststoffs und/oder der Dicke der Schicht zwischen dem mindestens einen Bereich, auf dem die mindestens eine Schicht Kunststoff befestigt ist, und mindestens einem weiteren Bereich der Oberfläche der ersten Teilform für das umzuformende Bauteil veränderliche Traganteile zu erreichen. Durch die Oberfläche der ersten Teilform ist ein Ausweichen des üblicherweise blechförmigen Bauteils beim Umformen zu vermeiden. Eine Verteilung einer Kraft zwischen der Oberfläche der ersten Teilform und dem Bauteil ist unter anderem durch die Höhe bzw. Dicke der Schicht aus Kunststoff, eine Form der Fläche des mindestens einen mit Kunststoff beschichteten Bereichs und eine Art bzw. Sorte und/oder Zusammensetzung des Kunstoffs zu steuern.

Üblicherweise wird zumindest die erste der beiden Teilformen mit Kunststoff beschichtet. Die zweite Teilform bildet eine Gegengeometrie zu der ersten, mit Kunststoff beschichteten Teilform, wobei hierdurch eine hohe maßliche Genauigkeit des umzuformenden Bauteils zu gewährleisten ist. Falls die zweite Teilform ebenfalls aus einem Kunststoff gebildet oder zumindest eine Schicht aus Kunststoff aufweist, ist es möglich, dass für die erste Teilform mindestens ein Kunststoff verwendet wird, der sich von einem Kunststoff für die zweite Teilform unterscheidet. Beim Herstellen der ersten Teilform wird mindestens ein definierter Bereich auf der Oberfläche des Grundkörpers in Ausgestaltung grob gefräst und somit aufgeraut. Danach wird der mindestens eine aufgeraute Bereich mit dem Haftmittel, bspw. einem Haftvermittler, bestrichen, wobei das Haftmittel auf dem mindestens einem Bereich, der zuvor aufgeraut worden ist, aufgetragen wird.

Durch Einsatz der Gussform, die auf den mindestens einen bearbeiteten Bereich des Grundkörpers der ersten Teilform angeordnet wird, wobei sich zwischen der Gussform und dem mindestens einen Bereich auf der Oberfläche des Grundkörpers mindestens ein Hohlraum befindet, wird in den mindestens einen Hohlraum flüssiger Kunststoff eingeführt und somit auf der Oberfläche konturnah aufgegossen, wobei hier durch Wahl einer Geometrie der Schicht aus Kunststoff, z. B. zur Vermeidung eines Schwunds oder einer Ungenauigkeit, eine definierte Struktur bzw. ein definiertes Aufmaß der Oberfläche der ersten Teilform bereitzustellen ist.

Die Gussform bildet hierbei mit dem bereits vorab bearbeiteten Grundkörper aus Kunststoff eine negative Form für die mindestens eine zusätzliche Schicht aus Kunststoff. Demnach dient der Grundkörper auch als Guss- und oder Formwerkzeug für mindestens eine Schicht aus Kunststoff. Bei dem Bearbeiten des Grundkörpers aus Kunststoff ist es möglich, durch einen Grad einer Aufrauung eine Haftung des darauf aufzutragenden Kunststoffs zu verbessern.

Mit dem durch das Verfahren hergestellten Metallbearbeitungswerkzeug ist es u. a. möglich, ein Blech als zu bearbeitendes Bauteil mit einer weitgehend konstanten Dicke, die nur geringfügig variiert, herzustellen. Außerdem kann ein Tuschieraufwand reduziert werden. Durch Vorsehen der mindestens einen Schicht aus Kunststoff sind bspw. durch Erhöhung einer Reibung sowie Reduzierung einer nötigen Niederhaltekraft tribologische Bedingungen gezielt anzupassen. Weiterhin sind in Abhängigkeit von Funktionen und Prozessen auf der wirksamen Oberfläche der ersten Teilform veränderliche Traganteile bereitzustellen. Beim Herstellen des Metallbearbeitungswerkzeugs und/oder bei dessen Einsatz kann auf ansonsten übliche Werkzeuge oder Bauteile aus Blech verzichtet werden. Weiterhin ist die erste Teilform beschleunigt zu bearbeiten.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Darstellung Schritte einer Ausführungsform des erfindungsgemäßen Verfahrens, bei dem eine erste Ausführungsform des Metallbearbeitungswerkzeugs hergestellt wird.
Figur 2 zeigt in schematischer Darstellung ein Detail einer zweiten Ausführungsform des Metallbearbeitungswerkzeugs.

Die Figuren werden zusammenhängend und übergreifend beschrieben, gleichen Komponenten sind dieselben Bezugsziffern zugeordnet.

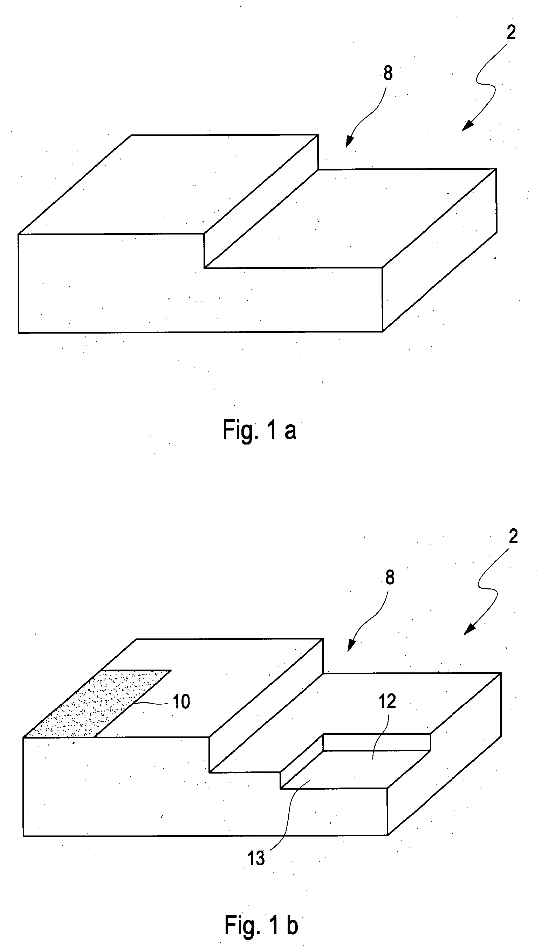

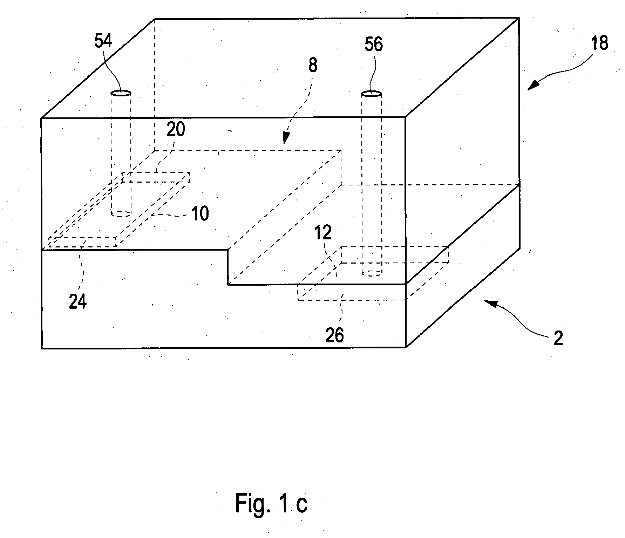

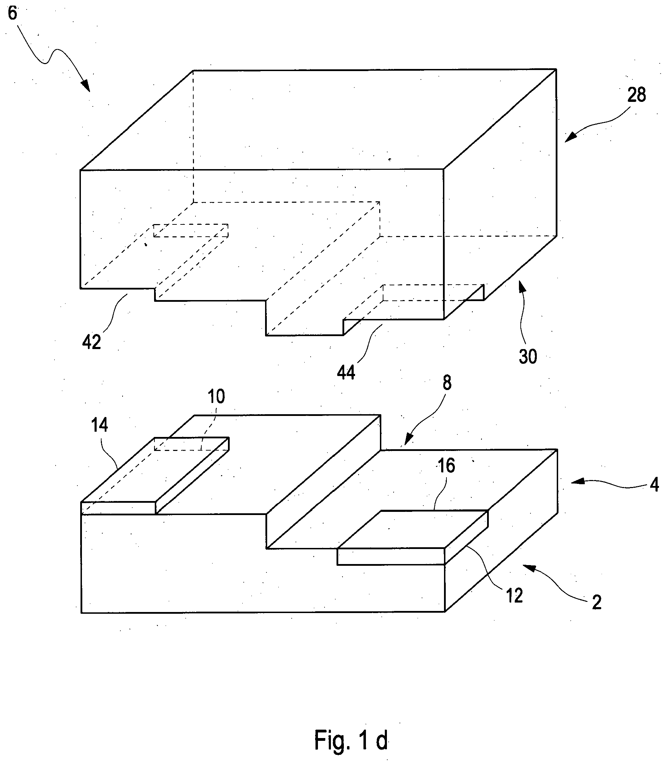

Anhand der Figuren 1a, 1b, 1c und 1d ist schematisch dargestellt, wie bei Durchführung der Ausführungsform des erfindungsgemäßen Verfahrens aus einem Grundkörper 2 aus mindestens einem ersten Kunststoff eine erste Teilform 4 als Komponente der Ausführungsform des Metallbearbeitungswerkzeugs 6 hergestellt wird. Dabei ist vorgesehen, dass die herzustellende erste Teilform 4 als Niederhalter des Metallbearbeitungswerkzeugs 6 ausgebildet und/oder zu verwenden ist. Dabei ist hier vorgesehen, dass der Grundkörper 2 unter Durchführung eines Gießverfahrens mit einer Gussform hergestellt wird. Diese erste Teilform 4 ist bspw. als Niederhalter ausgebildet und/oder zu bezeichnen.

Weiterhin wird bzw. werden zunächst auf einer ursprünglichen Oberfläche 8 des Grundkörpers 2 mindestens ein Bereich 10, 12, hier zwei Bereiche 10, 12 bzw. Flächen, ausgewählt, auf die im Rahmen des Verfahrens jeweils eine Schicht 14, 16 aus mindestens einem zweiten Kunststoff aufzubringen bzw. zu befestigen ist. Hierbei wird für jeden der beiden Bereiche 10, 12 auf der Oberfläche 8 eine Oberflächenbearbeitungsmaßnahme durchgeführt. Dabei befindet sich ein erster, hier ebener bzw. flacher Bereich 10, der für eine erste Schicht 14 vorgesehen ist, unmittelbar an und/oder auf der Oberfläche 8. In einem zweiten Bereich 12 der Oberfläche 8 wird Kunststoff abgetragen und eine Ausnehmung 13 bzw. Vertiefung und/oder Tasche an der ursprünglich ebenen bzw. glatten Oberfläche 8 gebildet, dabei wird die zweite Schicht 16 an bzw. auf dem zweiten Bereich 12 der Oberfläche 8 in der Ausnehmung 13 angeordnet.

Dabei wird hier jeder Bereich 10, 12 aufgeraut und auf den aufgerauten Bereichen 10, 12 ein Haftmittel aufgetragen (Figur 1b). In einem weiteren Schritt (Figur 1c) ist vorgesehen, dass auf der Oberfläche des Grundkörpers 2 eine Gussform 18 angeordnet wird.

Dabei umfasst die Gussform 18 eine Ausnehmung 20, die dem ersten, hier ebenen Bereich 10 auf der Oberfläche 8 des Grundkörpers 2 zugeordnet ist. Weiterhin ist vorgesehen, dass der erste Bereich 10 auf der Oberfläche 8 des Grundkörpers 2 und die Ausnehmung 20 einen ersten Hohlraum 24 umschließen. Außerdem ist der Ausnehmung 20 und somit dem ersten Hohlraum 24 ein erster innerhalb der Gussform 18 verlaufender Kanal 54 zugeordnet.

Ein zweiter ebener, flacher und/oder glatter Bereich einer Oberfläche der Gussform 18 ist dem zweiten Bereich 12 und somit der Ausnehmung 13 an und/oder auf der Oberfläche 8 des Grundkörpers 2 zugeordnet. Der zweite Bereich 12 mit der Ausnehmung 13 in der Oberfläche 8 des Grundkörpers 2 und die Oberfläche der Gussform 18 umschließen einen zweiten Hohlraum 26. Dabei ist dem zweiten Hohlraum 26 und/oder der Ausnehmung 13 an der Oberfläche 8 des Grundkörpers 2 ein innerhalb der Gussform 18 verlaufender Kanal 56 zugeordnet.

Weiterhin wird in die beiden Hohlräume 24, 26 durch die Kanäle 54, 56 der mindestens eine zweite Kunststoff in flüssiger Form eingefüllt. Dabei ist es denkbar, dass in den ersten Hohlraum 24 eine erste Art bzw. Sorte Kunststoff und in den zweiten Hohlraum 26 eine zweite Art bzw. Sorte Kunststoff eingefüllt wird, wobei sich eine oder beide Arten Kunststoff von dem ersten Kunststoff des Grundkörpers in der Regel unterscheiden. Somit können unterschiedliche Kunststoffe mit unterschiedlichen Materialeigenschaften verwendet werden, die unterschiedliche chemische Zusammensetzungen und/oder Eigenschaften aufweisen. Die Kunststoffe härten innerhalb der jeweiligen Hohlräume 24, 26 aus.

Auf dem ersten Bereich 10 wird die erste Schicht 14 aus der ersten Art Kunststoff gebildet, der auf dem aufgerauten und mit Haftmittel versehenen Bereich 10 des Grundkörpers 8 befestigt ist. Dabei umfasst die erste Schicht 14 aus der ersten Art Kunststoff eine erste Dicke bzw. Höhe, einen ersten Reibwert sowie eine erste Federhärte.

Weiterhin wird auf dem zweiten Bereich 12 der Oberfläche 8 und/oder in der dort angeordneten Ausnehmung 13 die zweite Schicht 16 aus der zweiten Art Kunststoff befestigt, wobei diese zweite Schicht 16 hier eine zweite Dicke bzw. Höhe, einen zweiten Reibwert sowie eine zweite Federhärte aufweist, die sich jeweilig von der ersten Dicke, dem ersten Reibwert sowie der ersten Federhärte der ersten Schicht 14 unterscheiden kann.

Eine Dicke einer jeweiligen Schicht 14, 16 ist in einem ersten Schritt durch eine Höhe und/oder Tiefe einer jeweiligen Ausnehmung bestimmt. In diesem Fall wird die Dicke durch die Tiefe der Ausnehmung 20 der Gussform 18, die auf dem ebenen Bereich 10 der Oberfläche 8 angeordnet wird, und durch die Tiefe der Ausnehmung 13 an dem zweiten Bereich 12 der Oberfläche 8, auf der ein ebener Bereich der Gussform 18 angeordnet wird, bestimmt, wobei ein jeweiliger Hohlraum 24, 26 bereitgestellt wird. Eine weitere Möglichkeit zum Steuern der Dicke ist, eine durch den jeweiligen Kanal 54, 56 einzufüllende Menge des jeweiligen Kunststoffs zu kontrollieren, die aber in beiden Fällen zur Feinjustierung in einem zweiten Schritt ggf. durch Nachbearbeitung anzupassen ist.

Durch Befestigen der beiden Schichten 14, 16 auf den Bereichen 10, 12 der Oberfläche 8 wird aus dem Grundkörper 2 die erste Teilform 4 und somit der Niederhalter des Metallbearbeitungswerkzeugs 6 gebildet. Figur 1d zeigt auch eine zweite Teilform 28 als weitere Komponente des Metallbearbeitungswerkzeugs 6. Dabei weist diese zweite Teilform 28 eine Oberfläche 30 auf, die zu der Oberfläche 8 des Grundkörpers 2 mit den darauf befestigten Schichten 14, 16 aus dem ersten Kunststoff komplementär ausgebildet ist. Hierbei weist die zweite Teilform 28 zwei Ausnehmungen 42, 44 auf, die zu den Schichten 14, 16 aus dem mindestens zweiten Kunststoff auf der Oberfläche 8 der ersten Teilform 4 komplementär ausgebildet sind.

Zum Umformen eines Bauteils aus Metall, üblicherweise aus Blech, ist dieses zwischen den beiden Teilformen 4, 28 des Metallbearbeitungswerkzeugs 6 anzuordnen. Danach werden die beiden Teilformen 4, 28 aufeinander zu bewegt, wobei das Bauteil zwischen den Teilformen 4, 28 gepresst wird.

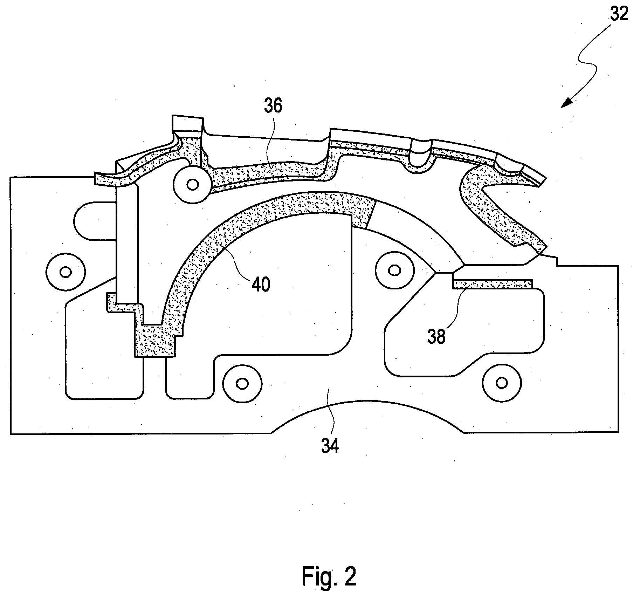

Figur 2 zeigt ein weiteres Beispiel für eine erste Teilform 32 als Komponente der zweiten Ausführungsform des Metallbearbeitungswerkzeugs. Auch diese erste Teilform 32 ist als Niederhalter ausgebildet und weist einen Grundkörper 34 aus Kunststoff auf, auf dem hier mehrere Schichten 36, 38, 44 aus unterschiedlichen Arten Kunststoff mit unterschiedlichen Dicken befestigt sind.

Die vorgestellten ersten Teilformen 4, 32 des Metallbearbeitungswerkzeugs sind als Niederhalter dazu ausgebildet, einen Materialfluss eines zu bearbeitenden Bauteils zu steuern, wobei ein Verzug, eine Bildung von Falten und/oder ein Aufstauchen des Bauteils mit dem Niederhalter vermieden wird.

## Patentansprüche

1. Verfahren zum Herstellen einer ersten Teilform (4, 32) für ein Metallbearbeitungswerkzeug (6), bei dem zum Herstellen der ersten Teilform (4, 32) ein Grundkörper (2, 34) aus Kunststoff bereitgestellt wird, wobei eine Oberfläche (8) des Grundkörpers (2, 34) in mehrere Bereiche (10, 12) aufgeteilt wird, wobei an mindestens einem Bereich (10, 12) der Oberfläche (8) des Grundkörpers (2) mindestens eine Gussform (18) angeordnet wird, **dadurch gekennzeichnet,**
**dass** die mindestens eine Gussform (18) und der mindestens eine Bereich (10, 12) der Oberfläche mindestens einen Hohlraum (24, 26) umschließen, der eine Negativform für eine auf dem mindestens einen Bereich (10, 12) aufzutragende Schicht (14, 16) Kunststoff bildet, wobei in den mindestens einen Hohlraum (24, 26) Kunststoff gefüllt und ausgehärtet wird, wobei der Kunststoff an dem mindestens einen Bereich (10, 12) mit der Oberfläche (8) des Grundkörpers (2, 34) verbunden und unter Bereitstellung der Schicht (14, 16) darauf aufgebracht wird, wobei die erste Teilform (4, 32) als Niederhalter ausgebildet ist.

2. Verfahren nach Anspruch 1, bei dem mindestens eine Sorte Kunststoff, die mindestens eine Materialeigenschaft aufweist, auf dem mindestens einen Bereich (10, 12) aufgebracht wird.

3. Verfahren nach Anspruch 1 oder 2, bei dem auf mindestens zwei unterschiedlichen Bereichen (10, 12) der Oberfläche (8) des Grundkörpers Schichten (14, 16) aus Kunststoff aufgebracht werden, die sich durch mindestens eine Materialeigenschaft voneinander unterscheiden.

4. Verfahren nach Anspruch 2 oder 3, bei dem als die mindestens eine Materialeigenschaft der jeweiligen Schicht (14, 16) aus Kunststoff eine Art des Kunststoffs, eine Federhärte bzw. ein E-Modul des Kunststoffs, ein Reibwert des Kunststoffs und/oder eine Dicke der Schicht (14, 16) berücksichtigt wird.

5. Verfahren nach einem der voranstehenden Ansprüche, bei dem der mindestens eine Bereich (10, 12) bearbeitet wird, bevor die Gussform (18) angeordnet wird.

6. Verfahren nach einem der voranstehenden Ansprüche, bei dem der Grundkörper (2, 34) mit einer Gussform gegossen wird.

7. Verfahren nach einem der voranstehenden Ansprüche, bei dem eine zweite Teilform (28) aus Stahl bereitgestellt wird, die als Gegenstück zu der ersten Teilform (4, 32) ausgebildet ist.

8. Verfahren nach einem der voranstehenden Ansprüche, bei dem der Kunststoff auf dem mindestens einen Bereich (10) der Oberfläche (8) des Grundkörpers (2, 34) aufgebracht wird

9. Verfahren nach einem der voranstehenden Ansprüche, bei dem an dem mindestens einem Bereich (12) der Oberfläche (8) des Grundkörpers (2) zunächst Kunststoff abgetragen und eine Ausnehmung (13) gebildet wird, wobei an dem mindestens einem Bereich (12) der Oberfläche (8) des Grundkörpers (2) die mindestens eine Gussform (18) angeordnet wird, wobei die mindestens eine Gussform (18) und die Ausnehmung (13) an dem mindestens einen Bereich (12) der Oberfläche mindestens einen Hohlraum (26) umschließen, wobei in den mindestens einen Hohlraum (26) Kunststoff gefüllt und ausgehärtet wird, wobei der Kunststoff an dem mindestens einen Bereich (12) mit der Oberfläche (8) des Grundkörpers (2, 34) verbunden und unter Bereitstellung der Schicht (16) in die Ausnehmung (13) eingebracht wird.

## Claims

1. Method for producing a first part mould (4, 32) for a metal machining tool (6), in which for producing the first part mould (4, 32) a basic body (2, 34) made of plastic is provided, wherein a surface (8) of the basic body (2, 34) is divided into several regions (10, 12), wherein at at least one region (10, 12) of the surface (8) of the basic body (2) is arranged at least one casting mould (18),
**characterised in**
**that** the at least one casting mould (18) and the at least one region (10, 12) of the surface enclose at least one hollow space (24, 26) which forms a negative mould for a layer (14, 16) of plastic which is to be applied on the at least one region (10, 12), wherein plastic is filled into the at least one hollow space (24, 26) and is hardened, wherein the plastic is connected with the surface (8) of the basic body (2, 34) at the at least one region (10, 12) and applied thereon to form the layer (14, 16), wherein the first part mould (4, 32) is in the form of a blank holder.

2. Method according to claim 1, in which at least one sort of plastic which has at least one material property is applied on the at least one region (10, 12).

3. Method according to claim 1 or 2, in which layers (14, 16) of plastic which differ from one another by means of at least one material property are applied on at least two regions (10, 12) of the surface (8) of the basic body.

4. Method according to claim 2 or 3, in which a type of the plastic, a spring hardness or an E-modulus of the plastic, a frictional value of the plastic and/or a thickness of the layer (14, 16) is taken into consideration as the at least one material property of the respective layer (14, 16) of plastic.

5. Method according to any of the preceding claims, in which the at least one region (10, 12) is processed before the casting mould (18) is arranged.

6. Method according to any of the preceding claims, in which the basic body (2, 34) is cast using a casting mould.

7. Method according to any of the preceding claims, in which a second part mould (28) made of steel is provided which is designed as a counter piece to the first part mould (4, 32).

8. Method according to any of the preceding claims, in which the plastic is applied to the at least one region (10) of the surface (8) of the basic body (2, 34).

9. Method according to any of the preceding claims, in which, at the at least one region (12) of the surface (8) of the basic body (2), first plastic is ablated and a recess (13) is formed, wherein at the at least one region (12) of the surface (8) of the basic body (2) is arranged the at least one casting mould (18), wherein the at least one casting mould (18) and the recess (13) enclose at least one hollow space (26) at the at least one region (12) of the surface, wherein plastic is filled into the at least one hollow space (26) and is hardened, wherein the plastic is connected at the at least one region (12) with the surface (8) of the basic body (2, 34) and is introduced into the recess (13) to form the layer (16).

## Revendications

1. Procédé de fabrication d'une première partie de moule (4, 32) pour un outil d'usinage de métaux (6), dans lequel un corps de base (2, 34) en plastique est prévu pour la fabrication de la première partie de moule (4, 32), dans lequel une surface (8) du corps de base (2, 34) est divisée en plusieurs zones (10, 12), dans lequel au moins un moule de coulée (18) est disposé sur au moins une zone (10, 12) de la surface (8) du corps de base (2)
**caractérisé en ce que**
l'au moins un moule de coulée (18) et l'au moins une zone (10, 12) de la surface renferment au moins une cavité (24, 26) qui forme un moule négatif pour une couche (14, 16) de plastique à appliquer sur l'au moins une zone (10, 12), dans lequel du plastique est rempli et durci dans l'au moins une cavité (24, 26), dans lequel le plastique est lié à la surface (8) du corps de base (2, 34) au niveau de l'au moins une zone (10, 12) et est appliqué sur celle-ci en fournissant la couche (14, 16), dans lequel la première partie de moule (4, 32) est réalisée en tant que serre-flan.

2. Procédé selon la revendication 1, dans lequel au moins un type de plastique, qui présente au moins une propriété matérielle, est appliqué sur l'au moins une zone (10, 12).

3. Procédé selon la revendication 1 ou 2, dans lequel des couches (14, 16) de plastique, qui diffèrent l'une de l'autre par au moins une propriété matérielle, sont appliquées sur au moins deux zones différentes (10, 12) de la surface (8) du corps de base.

4. Procédé selon la revendication 2 ou 3, dans lequel un type de plastique, une dureté élastique ou un module d'élasticité du plastique, un coefficient de friction du plastique et/ou une épaisseur de la couche (14, 16) est pris en compte en tant qu'au moins une propriété matérielle de la couche respective (14, 16) de plastique.

5. Procédé selon l'une quelconque des revendications précédentes, dans lequel l'au moins une zone (10, 12) est usinée avant que le moule de coulée (18) soit disposé.

6. Procédé selon l'une quelconque des revendications précédentes, dans lequel le corps de base (2, 34) est coulé avec un moule de coulée.

7. Procédé selon l'une quelconque des revendications précédentes, dans lequel une seconde partie de moule (28) en acier est prévue, qui est réalisée en contrepartie de la première partie de moule (4, 32).

8. Procédé selon l'une quelconque des revendications précédentes, dans lequel le plastique est appliqué sur l'au moins une zone (10) de la surface (8) du corps de base (2, 34)

9. Procédé selon l'une quelconque des revendications précédentes, dans lequel du plastique est d'abord enlevé de l'au moins une zone (12) de la surface (8) du corps de base (2) et un évidement (13) est formé, dans lequel l'au moins un moule de coulée (18) étant disposé sur l'au moins une zone (12) de la surface (8) du corps de base (2), dans lequel l'au moins un moule de coulée (18) et l'évidement (13) renferment au moins une cavité (26) au niveau de l'au moins une zone (12) de la surface, dans lequel du plastique est rempli et durci dans l'au moins une cavité (26), dans lequel le plastique est lié à la surface (8) du corps de base (2, 34) au niveau de l'au moins une zone (12) et est introduit dans l'évidement (13) en fournissant la couche (16).
